# EUROPÄISCHE PATENTANMELDUNG

(11) **EP 1 336 631 A2**
(43) Veröffentlichungstag der Anmeldung: **20.08.2003**
(21) Anmeldenummer: 02023865.5
(22) Anmeldetag: 24.10.2002
(51) Int. Cl.: C08G 18/66, C08L 75/04

(54) **Thermoplastisch verarbeitbare Polyurethan-Formmasse**

(30) Priorität: 18.02.2002 DE 10206839
(71) Anmelder: Intier Automotive Eybl Interiors GmbH, 94315 Straubing (DE); Carl Freudenberg KG, 69469 Weinheim (DE)
(72) Erfinder: Mühlfeld, Horst, 64689 Grasellenbach (DE); Schauber, Thomas, 69502 Hemsbach (DE); Christoph, Erich, 63179 Obertshausen (DE)
(74) Vertreter: Moldenhauer, Herbert

(57) **Zusammenfassung**

Die Erfindung betrifft eine thermoplastisch verarbeitbare Polyurethan-Formmasse, die aus einem Blend mindestens zweier thermoplastischer Polyurethane besteht, wobei mindestens 5 Gew.-% aus einem durch Umsetzung eines oder mehrerer aliphatischer Polyole mit einem Molekulargewicht von 800 bis 4000 g/mol und einer OH-Zahl von 20 bis 235 ausgewählt aus der Gruppe Polyadipate, Polycaprolactone, Polycarbonate, Polytetrahydrofurane und entsprechenden Copolymere oder deren Gemische mit 1,6-Hexamethylendiisocyanat und dem Kettenverlängerungsmittel 1,6-Hexandiol in einem Äquivalenzverhältnis des 1,6-Hexamethylendiisocyanats zum Polyol von 1,5 : 1 bis 14,0 : 1, wobei die NCO-Kennzahl, gebildet aus dem mit 100 multiplizierten Quotienten der Äquivalenzverhältnisse von Isocyanatgruppen zur Summe der Hydroxylgruppen von Polyol und Kettenverlängerungsmittel in einem Bereich von 96 bis 105 liegt, erhaltenen thermoplastischen Polyurethan als Komponente A besteht und der Rest zu 100 Gew.-% aus einem oder mehreren durch Umsetzung eines oder mehrerer aliphatischer Polyole mit einem Molekulargewicht von 800 bis 4000 g/mol und einer OH-Zahl von 20 bis 235 ausgewählt aus der Gruppe Polyadipate, Polycaprolactone, Polycarbonate, Polytetrahydrofurane und entsprechenden Copolymere oder deren Gemische mit den Diisocyanaten: 1,6-Hexamethylendiisocyanat, Isophorondiisocyanat, Dicyclohexylmethandiisocyanat, Diphenylmethandiisocyanat und einem Kettenverlängerungsmittel ausgewählt aus der Gruppe 1-4 Butandiol, 1,5 Pentandiol, 1,4-Cyclohexandiol, Bis(hydroxymethyl)cyclohexan, Bis(hydroxyethyl)hydrochinon, Polycaprolacton mit einem zahlenmittleren Molekulargewicht von 350 bis 600 g/mol und Polytetrahydrofuran mit einem zahlenmittleren Molekulargewicht von 200 bis 600 g/mol in einem Äquivalenzverhältnis des Diisocyanats zum Polyol von 1,5 : 1 bis 14,0 : 1, wobei die NCO-Kennzahl, gebildet aus dem mit 100 multiplizierten Quotienten der Äquivalenzverhältnisse von Isocyanatgruppen zur Summe der Hydroxylgruppen von Polyol und Kettenverlängerungsmittel in einem Bereich von 96 bis 105 liegt, erhaltenen weiteren thermoplastischen Polyurethan als Komponente B besteht.

## Beschreibung

### Technisches Gebiet

Die Erfindung betrifft eine thermoplastisch verarbeitbare Polyurethan-Formmasse, die aus einem Blend mindestens zweier thermoplastischer Polyurethane besteht.

### Stand der Technik

Aus den Dokumenten DE 26 58 136 und DE 42 03 307 sind thermoplastisch verarbeitbare Polyurethane (TPU) bekannt, die aus Gemischen verschiedener aliphatischer Polyole und 1,6-Hexamethylendiisocyanat mit Kettenverlängerungsmitteln wie 1,4-Butandiol bestehen. Die dort beschriebenen Polyurethan-Formmassen können insbesondere zur Herstellung von Lebensmittelverpackungen, aber auch zur Herstellung von Folien für dekorative Anwendungen eingesetzt werden. Die in den Patentschriften definierten Polyurethan-Formmassen sind zwar bezüglich ihrer Schmelzeigenschaften für thermoplastische Verarbeitungsverfahren sowie hinsichtlich ihres Festigkeitsniveaus für die vorgenannten Anwendungen geeignet, von Nachteil sind jedoch Anteile cyclischer Oligourethane in den Polyurethan-Formmassen. Durch Migration dieser Cyclooligourethane können optische Veränderungen z.B. auf der Oberfläche von Folien hervorgerufen werden.

Zwar werden im Dokument DE 199 40 014 licht- und wärmestabile thermoplastische Polyurethane (TPU) beschrieben, die hohen optischen Anforderungen genügen und nach einem beschleunigten Alterungstest bei 60°C bis 90°C noch Formkörper liefern, die nur eine geringe Belagsbildung zeigen. In Langzeittests, das heißt, Lagerung von Proben bei Raumtemperatur über mindestens 100 Tage so wie bei Lagerung von Proben in einer wasserdampfgesättigten Atmosphäre über einen Zeitraum von 28 Tagen bei 48°C wird der Migrationsprozeß und die Bildung von Weißbelag erheblich beschleunigt und es zeigen sich auch bei den vorgenannten TPU auf der Oberfläche der Proben Weißbeläge, die zu einer deutlichen Farbveränderung und Mattierung der Proben führen. Für die meisten Anwendungen ist dies in höchstem Maße unerwünscht, weil sich die an der Oberfläche als Weißbelag abscheidenden Stoffe nur schwer oder gar nicht entfernen lassen.
Weiterhin sind aus dem Dokument EP-A 1 149 851 thermoplastische Polyurethane bekannt, die aus Hexamethylendiisocyanat oder einem Gemisch mit anderen Diisocyanaten, Polytetramethylenglykol oder einem Gemisch mit anderen Polyolen mit Molekulargewichten von 600 bis 5000 g/mol sowie 1,6-Hexandiol oder einem Gemisch mit anderen Kettenverlängerern mit Molekulargewichten von 60 bis 500 g/mol bestehen und die unter den dort angegebenen Bedingungen nur eine geringe Belagsbildung zeigen.

### Darstellung der Erfindung

Die Erfindung hat sich die Aufgabe gestellt, eine thermoplastisch verarbeitbare Polyurethan-Formmasse, die unter Langzeitlagerungsbedingungen oder Feuchtraumalterungstests keine oder nur sehr geringe Spuren von migrationsfähigen Substanzen (Nebenprodukte oder Hilfsstoffe) auf ihrer Oberfläche zeigt, anzugeben.

Die Aufgabe wird erfindungsgemäß durch die gattungsgemäß angegebene thermoplastisch verarbeitbare Polyurethan-Formmasse gelöst, die aus einem Gemisch (Blend) mindestens zweier thermoplastischer Polyurethane besteht, wobei mindestens 5 Gew.-% aus einem durch Umsetzung eines oder mehrerer aliphatischer Polyole mit einem Molekulargewicht von 800 bis 4000 g/mol und einer OH-Zahl von 20 bis 235 ausgewählt aus der Gruppe Polyadipate, Polycaprolactone, Polycarbonate, Polytetrahydrofurane und entsprechenden Copolymere oder deren Gemische mit 1,6-Hexamethylendiisocyanat (HDI) und dem Kettenverlängerungsmittel 1,6-Hexandiol in einem Äquivalenzverhältnis des 1,6-Hexamethylendiisocyanats zum Polyol von 1,5 : 1 bis 14,0 : 1, wobei die NCO-Kennzahl, gebildet aus dem mit 100 multiplizierten Quotienten der Äquivalenzverhältnisse von Isocyanatgruppen zur Summe der Hydroxylgruppen von Polyol und Kettenverlängerungsmittel in einem Bereich von 96 bis 105 liegt, erhaltenen thermoplastischen Polyurethan als Komponente A besteht und der Rest zu 100 Gew.-% aus einem oder mehreren durch Umsetzung eines oder mehrerer aliphatischer Polyole mit einem Molekulargewicht von 800 bis 4000 g/mol und einer OH-Zahl von 20 bis 235 ausgewählt aus der Gruppe Polyadipate, Polycaprolactone, Polycarbonate, Polytetrahydrofurane und entsprechenden Copolymere oder deren Gemische mit den Diisocyanaten: 1,6-Hexamethylendiisocyanat, Isophorondiisocyanat, Dicyclohexylmethandiisocyanat, Diphenylmethandiisocyanat und einem Kettenverlängerungsmittel ausgewählt aus der Gruppe 1-4 Butandiol, 1,5 Pentandiol, 1,4-Cyclohexandiol, Bis(hydroxymethyl)cyclohexan, Bis(hydroxyethyl)hydrochinon, Polycaprolacton mit einem zahlenmittleren Molekulargewicht von 350 bis 600 g/mol und Polytetrahydrofuran mit einem zahlenmittleren Molekulargewicht von 200 bis 600 g/mol in einem Äquivalenzverhältnis des Diisocyanats zum Polyol von 1,5 : 1 bis 14,0 : 1, wobei die NCO-Kennzahl, gebildet aus dem mit 100 multiplizierten Quotienten der Äquivalenzverhältnisse von Isocyanatgruppen zur Summe der Hydroxylgruppen von Polyol und Kettenverlängerungsmittel in einem Bereich von 96 bis 105 liegt, erhaltenen weiteren thermoplastischen Polyurethan als Komponente B besteht.

In der erfindungsgemäßen thermoplastische Polyurethan-Formmasse sind vorzugsweise bis zu 40 Gew.-% der Komponente A im Gemisch enthalten.

Besonders bevorzugt ist eine thermoplastische Polyurethan-Formmasse, bei der das Gemisch aus Polyurethanen hergestellt aus den Bestandteilen Polycarbonatdiol und/oder Poly-Adipatdiol, Hexamethylendiisocyanat und 1,6-Hexandiol als Komponente A und Polycarbonatdiol, und/oder Poly-Adipatdiol, Hexamethylendiisocyanat und 1,4-Cyclohexandiol und/oder Bis(hydroxymethyl)-cyclohexan als Komponente B besteht.

Die thermoplastische Polyurethan-Formmasse enthält vorzugsweise als Zusätze 0,1 bis 3 Gew.% eines UV-Licht-Absorbers, 0,1 bis 5 Gew.% eines Lichtstabilisators, 0,05 bis 2 Gew.% eines Antioxidants sowie gegebenenfalls bis zu 10 Gew.% eines Farbpigments oder Farbbatch jeweils bezogen auf die Gesamt-Polyurethan-Menge.

Das erfindungsgemäße Verfahren zur Herstellung einer thermoplastischen Polyurethan-Formmasse erfolgt in der Weise, dass die Ausgangspolyurethane getrennt hergestellt und in einem Extruder oder Kneter zur Polyurethanmasse verarbeitet werden.

Vorzugsweise werden die Zusätze in einem Schritt mit in die Polyurethanmasse eingearbeitet.

Erfindungsgemäß wird die thermoplastische Polyurethan-Formmasse als sinterfähiges Pulver zur Herstellung von Flächengebilden und Formkörpern verwendet.

Die Erfindung betrifft letztlich Formkörper, die aus dem erfindungsgemäßen thermoplastischen Polyurethan-Gemisch erhalten werden.

Überraschenderweise wurde gefunden, daß die Herstellung der erfindungsgemäßen thermoplastischen Polyurethan-Gemische unter den Bedingungen der Langzeitlagerung über einen Zeitraum von mindestens 100 Tagen bei Raumtemperatur bzw. der Lagerung in einer wasserdampfgesättigten Atmosphäre über einen Zeitraum von mindestens 28 Tagen bei 48°C eine äußerst geringe Weißbelagbildung zeigen.

Die erfindungsgemäß erhältlichen Polyurethan-Gemische weisen, wie die nachfolgend angegebenen Beispiele zeigen, keine mechanischen oder verarbeitungstechnischen Nachteile gegenüber den bekannten aliphatischen thermoplastisch verarbeitbaren Polyurethan-Formmassen auf. Auch das Kristallisationsverhalten für einen wirtschaftlichen Verarbeitungsprozeß wird nicht wesentlich beeinflußt. Sie weisen darüber hinaus die nachfolgenden Vorteile auf:
- gute Verarbeitbarkeit in Thermoplast-Verarbeitungsverfahren wie Spritzgießen, Schmelzextrussion, Schmelzspinn-, Sinter- oder Schmelzklebeverfahren,
- gutes Kristallisationsverhalten, insbesondere eine schnelle Rekristallisation für einen wirtschaftlichen Verarbeitungsprozeß in den vorgenannten Verfahren,
- hohe Zug-, Einreiß- und Weiterreißfestigkeit,
- gute elastische Eigenschaften.

Die Erfindung wird durch die nachfolgenden Beispiele näher erläutert.
Die erfindungsgemäßen TPU auf Basis unterschiedlicher Kettenverlängerer und Diisocyanate (Komponente A: Hexandiol und HDI sowie Komponente B: Auswahl aus der oben aufgeführten Gruppe der Kettenverlängerer und Diisocyanate) müssen in getrennten Reaktionsprozessen hergestellt werden. Dies kann in bekannterweise im Batchprozeß oder in einem Reaktionsextruder vorzugsweise unter Zusatz eines Katalysators erfolgen. Anschließend werden die TPU unter Zugabe von üblichen Hilfsmittel und Zusatzstoffen wie Lichtschutzmittel
UV-Absorber
Antioxidantien
interne Fließhilfsmittel und Trennmittel
Farbstoffe und Pigmenten
ggf. Hydrolyseschutzmittel
in einem Mischungsverhältnis von TPU-Komponente A / TPU-Komponente B in Gew.-Teilen
von 95 / 5 bis 5 / 95, bevorzugt 95 / 5 bis 40 / 60, compoundiert.
Dies kann z.B. mit einem Extruder oder Kneter erfolgen.

Überraschenderweise wurde gefunden, daß durch Kombination der aliphatischen TPU-Mischung auf HDI-Basis und der Kettenverlängerung mit Hexandiol (TPU-Komponente A) schon mit geringen Mengen von 5 Gew.-Teilen von einem TPU mit gleicher Polyol-Basis und einem Diisocyanat sowie einem Kettenverlängerer aus der Gruppe der TPU-Komponente B TPU-Formkörper geliefert werden, die nur sehr geringe oder keine Belagsbildung nach einer Lagerung bei Raumtemperatur sowie auch bei erhöhter Temperatur in einem feuchtwarmen Klima zeigen.

Weiterhin bleiben auch bei der Kombination der TPU-Komponente A mit den TPU-Komponenten B die vorteilhaften Schmelzeigenschaften des TPU auf Basis HDI und der Kettenverlängerung mit Hexandiol, Komponente A, wie Aufschmelzverhalten, Schmelzviskosität und schnelle Kristallisation weitgehend erhalten.
Dies sind geforderte Eigenschaften für eine gute thermoplastische Verarbeitung im Spritzgieß-, Extrusion sowie insbesondere für den Sinterprozeß.

Durch spezielle Kombinationen der TPU-Komponente A mit den TPU-Komponenten B werden neben der Belagsbildung auch noch weitere Eigenschaften der aliphatischen TPU deutlich verbessert. Insbesondere bei der Wärmeformbeständigkeit und Abriebfestigkeit der TPU ist eine Verbesserung möglich. Dies bringt weitere Vorteile z.B. für Oberflächenmaterialien, die im Kraftfahrzeug-Innenbereich eingesetzt werden. Die Narbenstabilität und Kratzfestigkeit von Oberflächenmaterialien aus dem TPU-Komponente A ist zwar bei Raumtemperatur ausreichend, aber bei erhöhter Temperatur wird die Forderung der Automobilindustrie nicht erfüllt. Mit den erfindungsgemäßen TPU kann dieses Problem gelöst werden. Auch die Härte der Oberflächenmaterialien ist durch die erfindungsgemäßen TPU beeinflußbar, ohne daß bei den weiteren Eigenschaften gravierende Nachteile entstehen. So ist z.B. ein weicher, lederartiger Griff bei einer Armaturentafelhaut durch die Kombination zweier im Aufbau unterschiedlicher TPU leichter realisierbar als mit einem einheitlich aufgebauten TPU, bei dem durch Härteverschiebung Nachteile wie z.B. im Verarbeitungsverhalten, der Temperaturstabilität und den Festigkeitseigenschaften in Kauf genommen werden müssen.

TPU, bei denen die TPU-Rohstoff-Komponenten aus TPU-Komponente A und TPU-Komponente B vorgemischt werden und die TPU-Synthese in einem gemeinsamen Arbeitsschritt durchgeführt wird, zeigen ein Eigenschaftsprofil, das sich deutlich von den Kombinationen der im Aufbau unterschiedlichen und getrennt hergestellten TPU aus Komponente A und Komponente B unterscheidet. Es wird mit diesen Systemen keine gravierende Verbesserung bezüglich Weißbelag bewirkt. Auch die Verarbeitbarkeit, Wärmeformstabilität, Festigkeitseigenschaften und Abriebverhalten sind gegenüber den TPU-Kombinationen aus vergleichbarer Rohstoffauswahl deutlich schlechter.

### Beispiele

Zusammensetzung der TPU-Komponente für die Compoundierung

| TPU | Polyol | | Diisocyanat | | Kettenverlängerer | |
|---|---|---|---|---|---|---|
| | Typ | Gew.- Tle / Mol | Typ | Gew.- Tle Mol | Typ | Gew- Tle Mol |
| Komponente A1 | Polycarbonatdiol | 100 / 0,05 | Hexamethylendiisocyanat | 30 / 0,178 | 1,6-Hexandiol | 15,57 / 0,132 |
| Komponente A2 | Hexandiol/Neopentyl-glykol-Adipat | 100 / 0,05 | Hexamethylendiisocyanat | 40 / 0,238 | 1,6-Hexandiol | 23,06 / 0,195 |
| Komponente B1 | Polycarbonatdiol | 100 / 0,05 | Hexamethylendiisocyanat | 35 / 0,208 | 1,4Cyclohexandiol | 18,99 / 0,164 |
| Komponente B2 | Polycarbonatdiol | 100 / 0,05 | Hexamethylendiisocyanat | 40 / 0,238 | Bis(hydroxy-methyl)-cyclohexan | 27,96 / 0,194 |
| Komponente B3 | Hexandiol/Neopentyl-glykol-Adipat | 100 / 0,05 | Dicyclohexylmethandiisocyanat | 50 / 0,191 | 1,4-Butandiol | 13,05 / 0,145 |
| Komponente B4 | Hexandiol/Neopentyl-glykol-Adipat | 100 / 0,05 | Diphenylmethandiisocyanat | 50 / 0,200 | 1,4-Butandiol | 13,86 / 0,154 |

### Vergleichsbeispiel

TPU Copolymer: TPU-Rohstoffkomponenten aus TPU-Komponente A und TPU-Komponente B vorgemischt und TPU-Synthese in einem Arbeitsschritt

| TPU | Polyol | | Diisocyanat | | Kettenverlängerer | |
|---|---|---|---|---|---|---|
| | Typ | Gew.- Tle / Mol | Typ | Gew.- Tle Mol | Typ | Gew- Tle Mol |
| Vergleich 1 | Polycarbonatdiol Hexandiol/Neopentyl-glykol-Adipat | 70 / 0,035 | Hexamethylendiisocyanat | 40 / 0,238 | 1,6-Hexandiol | 16,05 / 0,136 |
| | | 30 / 0,015 | | | Bis(hydroxymethyl)cyclohexan | 8,42 / 0,058 |

Die Herstellung der TPU erfolgte in einem Batchprozeß.
Polyol, Kettenverlängerer und Diisocyanat wurden unter Rühren in einem Reaktionskessel erwärmt und bei einer Temperatur von 200°C zu einer Platte ausgegossen. Die Platte wurde nach einer Lagerzeit von 24h bei RT zu Granulat verarbeitet.

### Zusammensetzung der TPU-Compounds (Kombinationen)

TPU-Compound 1: 95 Gew.-Teile TPU A1 + 5 Gew.-Teile TPU B1
TPU-Compound 2: 80 Gew.-Teile TPU A1 + 20 Gew.-Teile TPU B1
TPU-Compound 3: 70 Gew.-Teile TPU A1 + 30 Gew.-Teile TPU B2
TPU-Compound 4: 75 Gew.-Teile TPU A2 + 25 Gew.-Teile TPU B3
TPU-Compound 5: 85 Gew.-Teile TPU A2 + 15 Gew.-Teile TPU B4.

Allen TPU-Compounds wurden 0,4 Gew.-% Lichtschutzmittel (Chimassorb 944 von Fa. Ciba), 0,4 Gew.-%UV-Absorber (Tinuvin 328 von Fa. Ciba), 0,25 Gew.-% Antioxidant (Irganox 245 von Fa. Ciba) und 2 Gew.-% Schwarzfarbbatch auf Basis eines Rußes zugesetzt.
TPU-Compound 4 und 5 wurde noch zusätzlich ein Carbodiimid, Stabaxol P200, (Hydrolyseschutzmittel) zugemischt.
Die Compoundierung der erfindungsgemäßen TPU und der Additive zu einem homogenen Material wurde in einem Zweischneckenextruder durchgeführt.

### Prüfung der TPU auf Weißbelag

Aus den TPU-Compounds wurden Spritzgießplatten hergestellt, die anschließend unter folgenden Lagerbedingungen auf Weißbelag untersucht wurden.

Belagbildung bei einer Lagerung bei Raumtemperatur (18 - 25 °C ) nach

| TPU | 4 Wochen | 8 Wochen | 12 Wochen |
|---|---|---|---|
| Komponente A1 | gering | deutlich | deutlich |
| Komponente A2 | gering | deutlich | deutlich |
| Compound 1 | keine | keine | sehr gering |
| Compound 2 | keine | keine | keine |
| Compound 3 | keine | keine | keine |
| Compound 4 | keine | keine | keine |
| Compound 5 | keine | keine | keine |
| Vergleichsbeispiel 1 | keine | sehr gering | gering |

Belagbildung bei einer Lagerung in Wasserdampf gesättigter Atmosphäre bei 48 °C nach

| TPU | 7 Tagen | 14 Tagen | 28 Tagen |
|---|---|---|---|
| Komponente A1 | gering | deutlich | stark |
| Komponente A2 | gering | deutlich | stark |
| Compound 1 | keine | sehr gering | gering |
| Compound 2 | keine | keine | sehr gering |
| Compound 3 | keine | keine | keine |
| Compound 4 | keine | keine | keine |
| Compound 5 | keine | keine | sehr gering |
| Vergleichsbeispiel 1 | sehr gering | gering | gering |

Schnelltest zur Untersuchung auf Belagbildung:
Belagbildung bei einer Lagerung in Wasser bei 40 °C nach

| TPU | 2 Tagen | 3 Tagen | 4 Tagen |
|---|---|---|---|
| Komponente A1 | gering | deutlich | stark |
| Komponente A2 | gering | deutlich | stark |
| Compound 1 | keine | keine | gering |
| Compound 2 | keine | keine | sehr gering |
| Compound 3 | keine | keine | keine |
| Compound 4 | keine | keine | keine |
| Compound 5 | keine | keine | sehr gering |
| Vergleichsbeispiel 1 | keine | gering | deutlich |

Prüfung der Verarbeitbarkeit der TPU für die Herstellung von Oberflächenmaterialien für den Kraftfahrzeug-Innenbereich im Pulver-Sinter-Verfahren sowie das Eigenschaftsprofil der Sinterfolien.

Prüfergebnisse der relevanten Eigenschaften zur Bewertung der Verarbeitbarkeit im Pulver-Sinter-Verfahren

| TPU | Aufschmelz-verhalten | Verarbeitungstemperatur | Entformbarkeit | Knickanfälligkeit |
|---|---|---|---|---|
| Komponente A1 | schnell für kurze Zykluszeiten | 200-220°C | gut, schnelle Rekristallisation | hoch |
| Komponente A2 | genügend schnell für kurze Zykluszeiten | 200-220°C | gut, schnelle Rekristallisation | hoch |
| Vergleichsbeispiel 1 | schnelles Aufschmelzen | 190-220°C | mangelhaft, langsame Rekristallisation, kein verzugs-freies Entformen möglich | keine Bewertung wegen hohem Verzug möglich |
| Compound 2 | schnell für kurze Zykluszeiten | 200-220°C | gut, schnelle Rekristallisation | gering |
| Compound 3 | schnell für kurze Zykluszeiten | 200-220°C | gut, schnelle Rekristallisation | gering |
| Compound 4 | schnell für kurze Zykluszeiten | 200-220°C | gut, schnelle Rekristallisation | gering |

Ergebnisse der Prüfung an Sinterfolien

| **TPU** | **Härte** **Shore A** | **Haptik** | **Schmelzbereich** **°C** | **Wärmeform-be-ständigkeit,** **Narbenstabilität**^{**x**} **nach 240 h SoSi bei 120°C** |
|---|---|---|---|---|
| Komponente A1 | 92 | Kunststoffartiger Griff | 155-160 | geringe Glanzgradveränderung durch Anschmelzen der Narbenspitzen |
| Komponente A2 | 90 | Kunststoffartiger Griff | 155-160 | geringe Glanzgradveränderung durch Anschmelzen der Narbenspitzen |
| Vergleichs-beispiel 1 | 86 | Lederähnlicher Griff | 130-135 | starkes Aufglänzen, vollständiges Verschmelzen der Narbenstruktur |
| Compound 2 | 86 | lederähnlicher Griff | 170-175 | keine Glanzgradver-änderung, Narbenbild unverändert |
| Compound 3 | 87 | lederähnlicher Griff | 165-170 | keine Glanzgradver-änderung, Narbenbild unverändert |
| Compound 4 | 84 | lederähnlicher Griff | 160-165 | keine Glanzgradver-änderung, Narbenbild unverändert |

| | | | | |
|---|---|---|---|---|
| ^{x} Prüfung der Narbenstabilität in der Sonnensimulation: 240h Dauertest nach DIN 75 220 bei 120°C | | | | |

| **TPU** | **Zugfestigkeit DIN EN 527 (MPa)** | **Bruch-deh- nung** **DIN EN 527 (%)** | **Kratzfestigkeit Veslic-Verfahren**^{**x1**}**, Bewertung 0-5** **Fingernagel-prü- fung auf Schreib- spuren** | **Abriebfestigkeit Crockmetertest**^{**x2**} **A: trocken** **B: Scheibenreiniger** **C: Isopropanol** **D: Waschbenzin** **Bewertung 5-1** |
|---|---|---|---|---|
| Komponente A1 | 38 | 620 | Veslic: 2 keine Schreibspuren | A: 4 B: 4 C: 4 D: 3 |
| Komponente A2 | 41 | 510 | Veslic: 2 keine Schreibspuren | A: 4 B: 5 C: 4 D: 4 |
| Vergleichsbeispiel 1 | 19 | 305 | Veslic: 5 starke Schreibspuren | A: 3 B: 3 C: 2 D: 1 |
| Compound 2 | 36 | 585 | Veslic: 1 keine Schreibspuren | A: 5 B: 5 C: 4 D: 4 |
| Compound 3 | 40 | 560 | Veslic: 0 keine Schreibspuren | A: 5 B: 5 C: 5 D: 5 |
| Compound 4 | 37 | 525 | Veslic: 0 keine Schreibspuren | A: 5 B: 5 C: 5 D: 5 |

| | | | | |
|---|---|---|---|---|
| ^{x1} Veslic-Verfahren: Kunststoffscheibe mit einer Shore Härte D85 rotiert mit einer Anpreßkraft von 15 N und einer Geschwindigkeit von 15 cm/s auf dem Prüfkörper. Bewertung der Oberfläche: 0 = nicht verändert, 5 = sehr stark verändert | | | | |
| ^{x2} Crockmetertest: Prüfung nach DIN 54 021 Reibgewebe trocken: 100 Crockmeterhübe Reibgewebe mit Reinigungsmittel getränkt: 10 Crockmeterhübe Bewertung nach Graumaßstab: 5 = gut, 1 = schlecht | | | | |

## Patentansprüche

1. Thermoplastisch verarbeitbare Polyurethan-Formmasse bestehend aus einem Gemisch mindestens zweier thermoplastischer Polyurethane, wobei mindestens 5 Gew.-% aus einem durch Umsetzung eines oder mehrerer aliphatischer Polyole mit einem Molekulargewicht von 800 bis 4000 g/mol und einer OH-Zahl von 20 bis 235 ausgewählt aus der Gruppe Polyadipate, Polycaprolactone, Polycarbonate, Polytetrahydrofurane und entsprechenden Copolymere oder deren Gemische mit 1,6-Hexamethylendiisocyanat und dem Kettenverlängerungsmittel 1,6-Hexandiol in einem Äquivalenzverhältnis des 1,6-Hexamethylendiisocyanats zum Polyol von 1,5 : 1 bis 14,0 : 1, wobei die NCO-Kennzahl, gebildet aus dem mit 100 multiplizierten Quotienten der Äquivalenzverhältnisse von Isocyanatgruppen zur Summe der Hydroxylgruppen von Polyol und Kettenverlängerungsmittel in einem Bereich von 96 bis 105 liegt, erhaltenen thermoplastischen Polyurethan als Komponente A besteht und der Rest zu 100 Gew.-% aus einem oder mehreren durch Umsetzung eines oder mehrerer aliphatischer Polyole mit einem Molekulargewicht von 800 bis 4000 g/mol und einer OH-Zahl von 20 bis 235 ausgewählt aus der Gruppe Polyadipate, Polycaprolactone, Polycarbonate, Polytetrahydrofurane und entsprechenden Copolymere oder deren Gemische mit den Diisocyanaten: 1,6-Hexamethylendiisocyanat, Isophorondiisocyanat, Dicyclohexylmethandiisocyanat, Diphenylmethandiisocyanat und einem Kettenverlängerungsmittel ausgewählt aus der Gruppe 1-4 Butandiol, 1,5 Pentandiol, 1,4-Cyclohexandiol, Bis(hydroxymethyl)cyclohexan, Bis(hydroxyethyl)hydrochinon, Polycaprolacton mit einem zahlenmittleren Molekulargewicht von 350 bis 600 g/mol und Polytetrahydrofuran mit einem zahlenmittleren Molekulargewicht von 200 bis 600 g/mol in einem Äquivalenzverhältnis des Diisocyanats zum Polyol von 1,5 : 1 bis 14,0 : 1, wobei die NCO-Kennzahl, gebildet aus dem mit 100 multiplizierten Quotienten der Äquivalenzverhältnisse von Isocyanatgruppen zur Summe der Hydroxylgruppen von Polyol und Kettenverlängerungsmittel in einem Bereich von 96 bis 105 liegt, erhaltenen weiteren thermoplastischen Polyurethan als Komponente B besteht.

2. Thermoplastische Polyurethan-Formmasse nach Anspruch 1, **dadurch gekennzeichnet, dass** bis zu 40 Gew.-% der Komponente A im Gemisch enthalten sind.

3. Thermoplastische Polyurethan-Formmasse nach Anspruch 1 oder 2, **dadurch gekennzeichnet, dass** das Gemisch aus Polyurethanen hergestellt aus den Bestandteilen Polycarbonatdiol und/oder Poly-Adipatdiol, Hexamethylendiisocyanat und 1,6-Hexandiol als Komponente A und Polycarbonatdiol, und/oder Poly-Adipatdiol, Hexamethylendiisocyanat und 1,4-Cyclohexandiol und/oder Bis(hydroxymethyl)-cyclohexan als Komponente B besteht.

4. Thermoplastische Polyurethan-Formmasse nach einem der Ansprüche 1 bis 3, **dadurch gekennzeichnet, dass** als Zusätze 0,1 bis 3 Gew.-% eines UV-Licht-Absorbers, 0,1 bis 5 Gew.% eines Lichtstabilisators, 0,05 bis 2 Gew.% eines Antioxidants sowie gegebenenfalls bis zu 10 Gew.-% eines Farbpigments oder Farbbatch jeweils bezogen auf die Gesamt-Polyurethan-Menge enthalten sind.

5. Verfahren zur Herstellung einer thermoplastischen Polyurethan-Formmasse nach einem der Ansprüche 1 bis 4, **dadurch gekennzeichnet, dass** die Ausgangspolyurethane getrennt hergestellt und in einem Extruder oder Kneter zur Polyurethanmasse verarbeitet werden.

6. Verfahren zur Herstellung einer thermoplastischen Polyurethan-Formmasse nach Anspruch 5, **dadurch gekennzeichnet, dass** Zusätze in die Polyurethanmasse eingearbeitet werden.

7. Verwendung einer thermoplastischen Polyurethan -Formmasse gemäß einem der Ansprüche 1 bis 4 als sinterfähiges Pulver zur Herstellung von Flächengebilden und Formkörpern.

8. Formkörper erhalten aus einem thermoplastischen Polyurethan gemäß einem der Ansprüche 1 bis 4.
